(19) Europäisches Patentamt
European Patent Office
Office européen des brevets

(11) Veröffentlichungsnummer : **0 027 550**
**B1**

(12) **EUROPÄISCHE PATENTSCHRIFT**

(45) Veröffentlichungstag der Patentschrift : **15.05.85**

(21) Anmeldenummer : **80105541.9**

(22) Anmeldetag : **16.09.80**

(51) Int. Cl.⁴ : **C 08 F218/16**, C 08 F220/00, C 08 K 5/10, B 29 D 11/00

# (54) Wärmehärtbare Giessharzmischung zum Herstellen von Kunststoff-Formkörpern mit optischer Oberflächenqualität, ihre Verwendung sowie Verfahren und Vorrichtung zum Herstellen von Rückspiegeln für Kraftfahrzeuge oder dgl.

(30) Priorität : **20.09.79 DE 2938098**

(43) Veröffentlichungstag der Anmeldung : **29.04.81 Patentblatt 81/17**

(45) Bekanntmachung des Hinweises auf die Patenterteilung : **15.05.85 Patentblatt 85/20**

(84) Benannte Vertragsstaaten : **FR GB IT**

(56) Entgegenhaltungen :
**GB-A- 1 129 688**
**US-A- 3 872 042**
**US-A- 3 951 528**

(73) Patentinhaber : **Deutsche Spezialglas AG**
**Postfach 80**
**D-3223 Delligsen 2 (DE)**

(72) Erfinder : **Fricke, Helmut**
**Dr. Jasperstrasse 52**
**D-3223 Delligsen (DE)**
Erfinder : **Schillert, Horst**
**Am Sportplatz**
**D-3223 Delligsen 2 (DE)**

(74) Vertreter : **Goddar, Heinz J., Dr.**
**FORRESTER & BOEHMERT Widenmayerstrasse 4/I**
**D-8000 München 22 (DE)**

**EP 0 027 550 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft eine wärmehärtbare Gießharzmischung zum Herstellen von Kunststoff-Formkörpern mit optischer Oberflächenqualität, ihre Verwendung sowie ein Verfahren zum Herstellen von Rückspiegeln von Kraftfahrzeugen oder dergleichen im Gießverfahren unter Verwendung des vorgenannten Gießharzpolymerisates.

Bei Kraftfahrzeugen werden Rückspiegel unterschiedlicher Art verwendet. Dabei handelt es sich einmal um blendfreie Innenspiegel mit prismenartigem Querschnitt und zum anderen um Außenspiegel mit beliebig gewölbter sphärischer oder asphärischer Oberfäche. Wichtig ist bei allen derartigen Rückspiegeln, daß sie eine verzerrungsfreie Abbildung gewährleisten. An derartige Spiegel werden insbesondere Anforderungen gestellt, die in den « Richtlinien für Ausführung und Anbringen von Rückspiegeln an Straßenfahrzeugen », herausgegeben vom Bundesminister für Verkehr am 6. Juni 1966, genannt sind. Dort heißt es unter anderem, daß die Rückspiegel gegen Witterungseinflüsse und die üblichen Betriebsbeanspruchungen hinreichend widerstandsfähig sein müssen, ein verzerrungsfreies Spiegelbild aufweisen müssen, wobei die Spiegel sowohl plan als auch gewölbt sein dürfen, und so groß sein müssen, daß die Größe der spiegelnden Fläche 60 $cm^2$ nicht unterschreitet. Basierend auf diesen allgemeinen Forderungen stellt die Kraftfahrzeugindustrie detaillierte Ansprüche, nämlich Widerstandsfähigkeit der Spiegeloberfläche gegen Wischbeanspruchungen und den Angriff atmosphärischer Einsflüsse sowie aller gebräuchlichen Reinigungsmittel, verzerrungsfreie Beobachtungsmöglichkeit des rückwärtigen Verkehrs, wobei also die Flächenbrechwerte der Spiegeloberfläche möglichst 0,0 dpt betragen sollen, etc... Außerdem soll das Spiegelmaterial eine möglichst geringe Dichte besitzen, damit der Spiegel bei möglichst großer Abbildungsfläche ein möglichst geringes Gewicht aufweist. Weitere wesentliche Forderungen sind Splittersicherheit zur Vermeidung von Verletzungen beim Bruch des Spiegels, gute Schlag- und Stoßfestigkeit, Temperaturbeständigkeit bis maximal + 85 °C sowie UV-Strahlungsbeständigkeit. Für die spezielle Anwendung als abblendbarer Spiegel mit prismatischem Querschnitt muß die Spiegeloberfläche einen Reflexionswert von wenigstens 4 % des einfallenden Lichtes aufweisen, damit bei Kippstellung (Nachtfahrt) der rückwärtige Verkehr ausreichend zu erkennen ist.

Seit längerem fordert die Automobilindustrie aus Gründen der Sicherheit und der Gewichtseinsparung auch Kfz-Rückspiegel aus Kunststoff. Obwohl jedoch bereits eine Anzahl transparenter Kunststoffe sowie verschiedene Verfahren zur Verarbeitung derselben zur Herstellung von Kfz-Rückblickspiegeln vorgeschlagen worden sind, ist das Silikatglas bislang das einzige handelsübliche Material, welches die geforderten Eigenschaften hinsichtlich optischer Abbildungsqualität, insbesondere also Oberflächenplanität und Formbeständigkeit, besitzt.

Versuche, Formkörper aus Kunststoff allgemein und Spiegelscheiben im besonderen mit ausreichend guter Oberflächenqualität im Spritzgießverfahren herzustellen, sind aus der DE-PS 25 01 991 sowie der DE-PS 25 14 969 bekannt. Dabei sind aber auch die Grenzen des Spritzgießverfahrens angegeben, daß nämlich durch die Materialschrumpfung in der Spritzgießform, bedingt durch den Übergang aus der flüssigen in die feste Phase, die Ausbildung zweier hinreichend planer bzw. optisch einwandfreier Oberflächen ohne dioptrische Fehler, wie sie bei Rückspiegeln erforderlich sind, nicht möglich ist. Auch durch ein Nachpressen der Spritzgießform mittels eines hydraulischen Druckkissens, wie es in der DE-PS 25 14 969 vorgeschlagen ist, kann zwar die optische Qualität des Spritzlings, nicht jedoch die Planität entscheidend verbessert werden. Daneben hat jede im Spritzgießverfahren gefertigte Scheibe zwangsläufig optische Verzerrungen im Randbereich. Schließlich sind als Nachteile der spritzgießbaren thermoplastischen Kunststoffe noch deren leicht beschädigbare Oberfläche sowie die mangelnde chemische Resistenz zu nennen.

Zur Herstellung eines Keilspiegels mit verbesserter Bildqualität beschreibt die DE-OS 27 23 410 ein Spritzgießverfahren, bei dem zwischen Silikatglasscheiben erzeugte dünne Polymethylmethacrylatplatten in den Formhohlraum der Spritzgießform gelegt werden, woraufhin diese Platten dann mittels eingespritzter Polymethylmethacrylatschmelze verschweißt werden sollen. Auch dieses Verfahren führt jedoch nicht zu Erzeugnissen, die eine befriedigende optische Qualität aufweisen. Dies beruht darauf, daß auch bei diesem Verfahren kein spannungs- und verzerrungsfreier Verbund-Spritzling erhalten werden kann, so daß also die Planität einer Floatglasscheibe, somit die bei Kfz-Rückspiegeln erforderliche optische Güte, bei weitem nicht erreicht wird.

Es ist zwar bereits bekannt, aus wärmehärtbaren Gießharzmischungen der eingangs genannten Art, beispielsweise aus wärmehärtenden Harzen auf Diallyldiglykolcarbonatbasis, wie sie unter dem Handelsnamen CR 39 bekannt sind, Brillenscheiben oder Linsen, somit also Formkörper mit gekrümmten Formflächen, herzustellen, jedoch gelingt es nicht, mittels dieser Gießharzmischungen ebene Formkörper, wie Rückspiegel, mit befriedigender Oberflächenqualität zu erzeugen. Dies beruht darauf, daß bei der Herstellung solcher Formkörper mittels bekannter Gießharzmischungen sehr starke Scher- und Biegebeanspruchungen der Formgebungsflächen auftreten. Die Ursache hierfür ist die Volumenschrumpfung von ca. 13 % während der Polymerisation. Die Größe der auftretenden Zug- und Druckspannungen läßt sich daraus abschätzen, daß beispielsweise bei Kunststofflinsen mit einem Durchmesser vom 65 mm nach dem Entformen der fertig gegossenen und auspolymerisierten Formkörper ein Schrumpfen von nicht weniger als 0,3 bis 0,4 mm beobachtet wird. Derartige Schrumpfungen sind bei

gekrümmten Formkörpern, insbesondere also bei Linsen, teilweise noch tolerierbar, soweit es sich nicht um Brillenscheiben oder Linsen besonders hoher Dioptrienzahl handelt, jedoch führen die beschriebenen Verformungen bei der Herstellung von im wesentlichen ebenen Formkörpern, insbesondere also von Rückspiegeln, zu nicht tolerierbaren Beeinträchigungen der optischen Oberflächenqualität.

Der Erfindung liegt daher die Aufgabe zugrunde, eine wärmehärtbare Gießharzmischung der eingangs genannten Art sowie ein Verfahren zu ihrer Verarbeitung zu schaffen, welches es ermöglicht, Formkörper, insbesondere Rückblickspiegel für Kraftfahrzeuge oder dgl., aus Kunststoff herzustellen, welche neben Kratzfestigkeit, Resistenz gegenüber allen normalen Reinigungsmitteln und geringem Gewicht bei wirtschaftlicher Herstellbarkeit eine hohe Oberflächengüte, insbesondere also die notwendige optische Qualität, aufweisen.

Erfindungsgemäß wird diese Aufgabe durch eine wärmehärtbare Gießharzmischung der gattungsgemäßen Art gelöst, welche gekennzeichnet ist durch eine Gießharz-Basismischung und einen Zusatz von Ethylentriglykolmethacrylat als flexibilisierende Komponente.

Besonders bevorzugte Ausführungsformen der wärmehärtbaren Gießharzmischung nach der Erfindung sind Gegenstand der entsprechenden Unteransprüche.

Weiterhin lehrt die Erfindung die Verwendung der erfindungsgemäßen Gießharzmischung zum Herstellen von Rückspiegeln für Kraftfahrzeuge oder dergleichen im Gießverfahren.

Das erfindungsgemäße Verfahren zum Herstellen von Rückspiegeln für Kraftfahrzeuge oder dgl., wie es eingangs angegeben wurde, zeichnet sich dadurch aus, daß die Gießharzmischung in eine mit der der Ebene des herzustellenden Spiegels entsprechenden Formhohlraumebene im wesentlichen lotrecht angeordnete Gießform eingegeben wird, die oben eine Öffnung aufweist und mittels dieser während des Polymerisationsvorganges mit einem oberhalb der Gießform angeordneten Gießharzmischungs-Vorratsbehälter in Verbindung steht.

Bei der Erfindung werden also, nachdem sich gezeigt hat, daß im Spritzgießverfahren hergestellte Scheiben aus thermoplastischen Kunststoffen zur Herstellung von Kraftfahrzeug-Rückblickspiegeln nicht geeignet sind, wärmehärtbare Duroplaste verwendet und in bekannten Gießverfahren verarbeitet. Als entsprechende Duroplaste eignen sich dabei insbesondere, wie Versuche ergeben haben, Gießharzmischungen, die entweder ein Gemisch aus ca. 25 Gew.-% Bernsteinsäurediallylester, ca. 50 Gew.-% Glutarsäurediallylester und ca. 25 Gew.-% Adipinsäurediallylester als Basis haben, weiterhin aber auch das als CR 39 bekannte Diallyldiglykolcarbonat.

Durch Zusätze von Peroxiden, wie Diisopropylperoxydicarbonat oder Dicyclohexylperoxycarbonat, und Zuschläge von Methacrylsäuremethylester und/oder Methacrylatsäure-n-Butylester entstehen hieraus hervorragend für die Herstellung von Rückspiegeln geeignete duroplastische Kunststoffe.

Erfindungswesentlich ist aber, daß die wärmehärtbare Gießharzmischung als flexibilisierende Komponente einen Zusatz an Ethyltriglykolmethacrylat aufweist, Es hat sich überraschenderweise gezeigt, daß dieser Zusatz beim Polymerisationsvorgang bewirkt, daß einerseits die Oberflächen des entstehenden Formkörpers fest an den Formflächen haften bleiben, wodurch also eine einwandfrei glatte Oberfläche mit der Oberflächengüte der Formflächen entsprechender Qualität erzeugt wird, wobei weiterhin aber auch infolge der entstehenden inneren Elastizität bzw. des hierdurch ermöglichten « inneren Gleitens » innerhalb des Formkörpers ein Abbau der beim polymerisationsbedingten Schrumpfen auftretenden Spannungen durch den gesamten Formkörper hindurch gewährleistet ist. Hierdurch wird das Auftreten von Spannungen innerhalb des Formkörpers vermieden, so daß Verzerrungen auch bei dem bevorzugten Anwendungszweck, nämlich bei Rückspiegeln für Kraftfahrzeuge, nicht zu besorgen sind.

Erfindungsgemäß hergestellte Sicherheits-Rückspiegel haben eine optisch hochwertige Oberfläche. Infolge des geringen spezifischen Gewichtes, welches, sich zu demjenigen von Silikatglas wie etwa 1 : 2 verhält, lassen sich Spiegel mit erheblich größeren Sichtflächen herstellen, die sich darüber hinaus durch ihre große Vibrationsarmut auszeichnen. Auch lassen sich mittels der erfindungsgemäßen Gießharzmischung gewölbte Außenspiegel leicht herstellen, wie sie neuerlich aus Sicherheitsgründen empfohlen werden und deren Herstellung aus Silikatglas kostenaufwendig und schwierig ist. Hierin wird ein besonders wichtiges Merkmal der Erfindung gesehen.

Nachstehend sind Ausführungsbeispiele der Erfindung anhand der Zeichnung im einzelnen erläutert. Dabei zeigt :

Figur 1 ein erstes Ausführungsbeispiel einer beim Verfahren nach der Erfindung verwendbaren Gießform in der Draufsicht ;

Figur 2 einen Querschnitt durch die Gießform von Fig. 1 entlang der Linie II-II ;

Figur 3 ein abgewandeltes Ausführungsbeispiel einer beim erfindungsgemäßen Verfahren verwendbaren Gießform in der Ansicht ; und

Figur 4 einen Schnitt durch die Gießform von Fig. 3 entlang der Linie IV-IV.

Fig. 1 zeigt ein erstes Ausführungsbeispiel einer erfindungsgemäß verwendbaren Gießform 10, die zur Herstellung von Einzel-Keilspiegeln mit optischer Oberflächenqualität dient. Wie Fig. 2 erkennen läßt, weist die in den Fig. 1 und 2 wiedergegebene Gießform zwei die Formhälften bildende Formgebungsteile 12, 14 auf, die bei dem gezeigten Ausführungsbeispiel aus Floatglas bestehen, wobei aber als Formgebungsteilmaterial auch chemisch gehärtetes Glas oder auch Glaskeramik verwendet werden könnten. Am Rand sind die beiden Formgebungsteile 12, 14 durch einen elastischen Dichtungsring 16

bekannter Art zusammengehalten. Zusammen mit dem im Spritzgießverfahren aus Ethylen-Vinylacetat hergestellten Distanzring bilden die aus Silikatglas bestehenden Formgebungsteile 12, 14 einen Formhohlraum 18, in dem sich die Kunststoffmasse, aus welcher der Keilspiegel gebildet werden soll, befindet.

Als polymerisierbares Gießharz wird bei dem gezeigten Ausführungsbeispiel Diallyldiglykolcarbonat

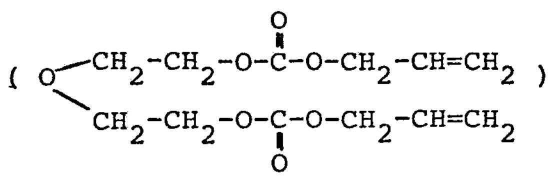

verwendet, welches bezogen auf die gesamte Gießharzmischung, 5 % Dicyclohexylperoxydicarbonat als Polymerisationsinitiator und 3 Gew.-% Ethyltriglykolmethacrylat

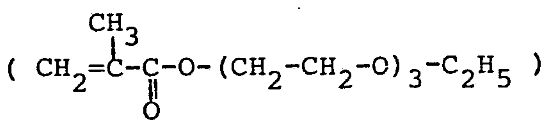

als Flexibilisator enthält. Die fertige Gießharzmischung wird gefiltert und alsdann in den Formhohlraum gedrückt, wobei der elastische Distanzring 16 natürlich örtlich etwas angehoben wird. Anschließend wird die gefüllte Form in einen Wärmeumluftofen eingebracht, dessen Temperatur, beginnend mit 50 °C, allmählich auf 80 °C ansteigt. Dieser Prozeß, bei dem die Polymerisation der Gießharzmischung erfolgt, dauert etwa 12 Stunden. Anschließend wird der glasklare, farblose polymerisierte Gießharzkörper aus der Form herausgenommen und in einer Hochvakuumanlage einflächig mit Aluminium oder Chrom nach bekannten Verfahren bedampft. Anschließend werden eine Schutzschicht (Lack) oder eine Schutzbedampfung (Siliziumoxid) aufgebracht. Auf diese Weise erhält man einen einsatzbereiten tadellosen Keilspiegel mit einem Keilwinkel von ca. 4°.

Gewölbte Außenspiegel werden im Prinzip entsprechend dem vorstehend beschriebenen Ausführungsbeispiel in einer Gießform 10 mit elastischem Distanzring 16 gefertigt, wobei dann natürlich die beiden Formgebungsteile 12, 14 die jeweils gewünschten Krümmungsradien aufweisen. Die exakte Herstellung dieser Formgebungsteile verursacht bekanntlich hohe Kosten, jedoch werden die Formen infolge des verwendeten Gießverfahrens nur als Mutterform in geringen Stückzahlen zum vielfachen Abformen benötigt.

In den Figuren 2 und 3 ist ein anderes Ausführungsbeispiel einer erfindungsgemäß verwendbaren Gießform wiedergegeben, bei dem die Gießform 20 zur Herstellung keilförmiger Streifen dient, aus denen mehrere, beliebig große Keilspiegel mit optischer Oberflächenqualität gefräst, gesägt oder geschnitten werden können. Die Gießform 20 weist zwei die Formhälften bildende Formgebungsteile 22, 24 auf, die wiederum aus Floatglas bzw. aus chemisch gehärtetem Glas bestehen. Die beiden Formgebungsteile 22, 24 sind im unteren Randbereich durch eine elastische Distanzschnur 28, im oberen Randbereich hingegen durch eine elastische Distanzschnur 26 aus Ethylen-Vinylacetat abdichtend auf Abstand gehalten, wobei durch die unterschiedlichen Durchmesser der Distanzschnüre 28, 26 die gewünschte Keilform des Formhohlraumes 36 entsteht. Den Abschluß der Schmalseiten des Formhohlraumes 36 bilden keilförmige Kunststoffkörper 30, ebenfalls aus Ethylen-Vinylacetat, mit in der zur Zeichenebene der Fig. 4 senkrechten Richtung rechteckigem Querschnitt.

Federstahlklammern 32, 34 halten die auf diese Weise gebildete Gießform 20 zusammen. Im Formhohlraum 36 wird entsprechend Fig. 1 die Gießharzmischung nach dem Eingeben polymerisiert. Wichtig ist, daß der Formhohlraum 36 oben offen ist und während des Polymerisationsvorganges dauernd mit einem Gießharz-Vorratsbehälter in Verbindung steht, so daß während des Polymerisationsvorganges Gießharz in den Formhohlraum nachfließen und hierdurch das Schrumpfen des Formlings kompensieren kann.

Bei dem in Fig. 3 und 4 gezeigten Ausführungsbeispiel wird als polymerisierbares Gießharz ein Diallylestergemisch verwendet, welches aus 25 Gew.-% Bernsteinsäurediallylester, 50 Gew.-% Glutarsäurediallylester und 25 Gew.-% Adipinsäurediallylester besteht. Weiterhin sind bis zu 15 Gew.-% Methacrylsäuremethylester, bis zu 5 Gew.-% Methacrylsäure-n-Butylester und bis zu 5 Gew.-% Ethyltriglykolmethacrylat, letzteres als Flexibilisator, vorgesehen. Die Gießharzmischung wird nach Zusatz eines Polymerisationsinitiators (bis zu 10 Gew.-% Dicyclohexylperoxidicarbonat) polymerisiert.

Anschließend wird der glasklare, farblose, polymerisierte prismatische Streifen aus der Gießform 20 herausgenommen und quer zur Längsrichtung in mehrere Teilstücke zersägt. In einem Fräsvorgang wird die äußere geometrische Form des Keilspiegels hergestellt. Auch die so gefertigten Rückspiegel werden in einer Vakuumbedampfungsanlage nach bekannten Verfahren mit Metall belegt. Auch kann wiederum eine abschließende Lack- oder Siliziumoxidschicht zum Schutz des Spiegelmetalls vor Beschädigungen vorgesehen werden.

Gewölbte Außenspiegel lassen sich im Prinzip entsprechend dem Ausführungsbeispiel, wie es in den

Fig. 1 und 2 gezeigt ist, auch mittels einer Gießform 20 der in Fig. 3 und 4 wiedergegebenen Art herstellen, wobei dann natürlich die Formgebungsteile 22, 24 entsprechende Krümmungen aufweisen müssen.

Nach dem vorstehend beschriebenen Verfahren lassen sich Rückspiegel für Kraftfahrzeuge auch dadurch herstellen, daß als wärmehärtbare Gießharzmischung, eine ungesättigte Polyester-Gießharzmischung, eine Epoxidmischung, eine Silikonharzmischung oder Polyurethanharzmischung verwendet wird. Der Ethyltriglykolmethacrylatanteil kann, bezogen auf die gesamte Gießharzmischung, insgesamt 2 bis 5 Gew.-% betragen, vorzugsweise, wie bei dem weiter oben beschriebenen Ausführungsbeispiel, etwa 3 Gew.-%.

Hinsichtlich der durch die Automobilindustrie gestellten detailierten Ansprüche, wie Widerstandsfähigkeit der Spiegeloberfläche gegen Wischbeanspruchungen, Angriff atmosphärischer Einflüsse wowie Angriff aller bekannten üblichen Reinigungsmittel, genügen die erfindungsgemäß hergestellten Rückspiegel allen Anforderungen. Zur Prüfung der chemischen Resistenz gegenüber den verschiedenen angreifenden Agenzien können bekanntlich die nachfolgenden Testmethoden zur Anwendung kommen : Schwitzwasser-Konstantklimatest SK nach DIN 50017, Schwitzwasser-Wechselklimatest in schwefeldioxidhaltiger Atmosphäre SFW 2, OS DIN 50018 (nach Kesternich), Sprühnebelprüfung mit verschiedenen Natriumchloridlösungen (Salzsprühtest) sowie einige firmenspezifische Prüfungen in Klimaschränken. Ein erfindungsgemäß hergestellter Rückspiegel sowie verschiedene, aus anderem Material hergestellte Rückspiegel wurden zur Messung der Abrieb- oder Verschleißfestigkeit nach dem Sandrieseltest hinsichtlich der Streulichtwerte gemessen. Dabei ergaben sich die nachfolgenden Resultate :

| Probe | O<br>τd (%) | X<br>τd (%) | Δ τd (%) | O<br>$\iota_1^*$ | X<br>$\iota_2^*$ | $\Delta\iota^*$ | Zum Vergleich<br>ρ(9/cm³) |
|---|---|---|---|---|---|---|---|
| Allylester (Ausführungsbeispiel 2) | 0,1 | 2,75 | 2,65 | 0,05 | 1,5 | 1,45 | 1,22 |
| Diallyldiglykolcarbonat (Ausführungsbeispiel 1) | 0,1 | 3,0 | 2,9 | 0,1 | 1,9 | 1,8 | 1,32 |
| Silikatglas | 0,05 | 2,3 | 2,25 | 0,05 | 1,15 | 1,1 | 2,5 |
| Polycarbonat | 0,1 | 23,0 | 22,9 | 0,4 | 53,8 | 53,4 | 1,2 |
| PMMA (Plexiglas) | 0,1 | 15,0 | 14,9 | 0,2 | 19,3 | 19,1 | 1,2 |

O : vor der Berieselung
X : nach der Berieselung

Die vorstehende Verschleißprüfung nach dem Sandrieseltest wurde entsprechend dem Norm-Entwurf DIN 52348 vorgenommen. Bei der Verschleißprüfung, die zur Prüfung des Verhaltens von Glas und Kunststoff, vorzugsweise für Brillenscheiben, gegen Verschleiß dient, wird der Oberflächenverschleiß festgestellt. Als Meßgröße dient die Zunahme des gestreuten transmittierten Lichtes, die durch die Oberflächenveränderungen während des Verschleißversuches bedingt ist. Anschließend werden der reduzierte Leuchtdichtekoeffizient $\iota^*$ und der Grad der gestreuten Transmission $\tau\alpha$ gemessen und die Zunahme des Streulichts als $\Delta\iota^*$ in (cd/m$^2$)/ιx oder $\Delta\tau_d$ in % angegeben.

Die vorstehenden Ergebnisse zeigen, daß sich mittels der beiden erstgenannten Proben, die also erfindungsgemäß hergestellte Rückspiegel betreffen, $\Delta\tau\alpha$ — Werte erreichen lassen, die kaum schlechter sind als die von Silikatglas. Demgegenüber liegen die Werte von Polycarbonat oder Plexiglas wesentlich höher.

Die in der vorstehenden Beschreibung, in der Zeichnung und in den nachfolgenden Ansprüchen offenbarten Merkmale der Erfindung können sowohl einzeln als auch in beliebigen Kombinationen für die Verwirklichung der Erfindung in ihren verschiedenen Ausführungsformen wesentlich sein.

**Patentansprüche**

1. Wärmehärtbare Gießharzmischung zum Herstellen von Kunststoff-Formkörpern mit optischer Oberflächenqualität, gekennzeichnet durch eine Gießharz-Basismischung und einen Zusatz von Ethyltriglykolmethacrylat als flexibilisierende Komponente.

2. Gießharzmischung nach Anspruch 1, dadurch gekennzeichnet, daß die Basismischung eine Diallylester-Gießharzmischung ist.

3. Gießharzmischung nach Anspruch 1, dadurch gekennzeichnet, daß die Basismischung eine Diallyldiglykolcarbonatmischung ist.

4. Gießharzmischung nach Anspruch 1, dadurch gekennzeichnet, daß die Basismischung eine ungesättigte Polyester-Gießharzmischung ist.

5. Gießharzmischung nach Anspruch 1, dadurch gekennzeichnet, daß die Basismischung eine Epoxidmischung ist.

6. Gießharzmischung nach Anspruch 1, dadurch gekennzeichnet, daß die Basismischung eine silikonharzmischung ist.

7. Gießharzmischung nach Anspruch 1, dadurch gekennzeichnet, daß die Basismischung eine Polyurethanharzmischung ist.

8. Gießharzmischung nach Anspruch 2, dadurch gekennzeichnet, daß die Basismischung aus etwa 25 Gew.-% Bernsteinsäurediallylester, etwa 50 Gew.-% Glutarsäurediallylester und etwa 25 Gew.-% Adipinsäurediallylester besteht.

9. Gießharzmischung nach einem der Ansprüche 1 bis 8, dadurch gekennzeichnet, daß der Ethyltriglykolmethacrylat-Anteil, bezogen auf die gesamte Gießharzmischung, 2 bis 5 Gew.-% beträgt.

10. Gießharzmischung nach Anspruch 9, dadurch gekennzeichnet, daß der Ethyltriglykolmethacrylat-Anteil, bezogen auf die gesamte Gießharzmischung, etwa 3 Gew.-% beträgt.

11. Gießharzmischung nach einem der Ansprüche 1 bis 10, gekennzeichnet durch einen zusätzlichen Gehalt an Peroxiden, wie Diisopropylperoxydicarbonat oder Dicyclohexylperoxidicarbonat, und/oder Zuschlägen von, bezogen auf die gesamte Gießharzmischung, bis zu 15 Gew.-% Methacrylsäuremethylester und/oder bis zu 5 Gew.-% Methacrylsäure-n-Butylester.

12. Gießharzmischung nach Anspruch 11, gekennzeichnet durch einen Zusatz von, bezogen auf die gesamte Gießharzmischung, bis zu 10 Gew.-% Polymerisationsinitiator, vorzugsweise Dicyclohexylperoxydicarbonat.

13. Verwendung der Gießharzmischung nach einem der Ansprüche 1 bis 12 zum Herstellen von Rückspiegeln für Kraftfahrzeuge oder dgl. im Gießverfahren.

14. Verfahren zum Herstellen von Rückspiegeln für Kraftfahrzeuge oder dgl. im Gießverfahren unter Verwendung der Gießharzmischung nach einem der Ansprüche 1 bis 12, dadurch gekennzeichnet, daß das Gießharzpolymerisat in eine mit der der Ebene des herzustellenden Spiegels entsprechenden Formhohlraumebene im wesentlichen lotrecht angeordnete Gießform eingegeben wird, die oben eine Öffnung aufweist und mittels dieser während des Polymerisationsvorganges mit einem oberhalb der Gießform angeordneten Gießharzmischung-Vorratsbehälter in Verbindung steht.

## Claims

1. A thermosetting casting resin mixture for making plastics mouldings of optical surface quality, characterised by a casting resin basic mixture and an addition of ethyl triglycol methacrylate as a flexibilizing component.

2. A casting resin mixture according to claim 1, characterised in that the basic mixture is a diallyl ester casting resin mixture.

3. A casting resin mixture according to claim 1, characterised in that the basic mixture is a diallyl diglycol carbonate mixture.

4. A casting resin mixture according to claim 1, characterised in that the basic mixture is an unsaturated polyester casting resin mixture.

5. A casting resin mixture according to claim 1, characterised in that the basic mixture is an epoxide mixture.

6. A casting resin mixture according to claim 1, characterised in that the basic mixture is a silicone resin mixture.

7. A casting resin mixture according to claim 1, characterised in that the basic mixture is a polyurethane resin mixture.

8. A casting resin mixture according to claim 2, characterised in that the basic mixture consists of approximately 25 % by weight of succinic acid diallyl ester, approximately 50 % by weight of glutaric acid diallyl ester and approximately 25 % by weight of adipic acid diallyl ester.

9. A casting resin mixture according to any one of claims 1 to 8, characterised in that the ethyl triglycol methacrylate content is 2 to 5 % by weight referred to the total casting resin mixture.

10. A casting resin mixture according to claim 9, characterised in that the ethyl triglycol methacrylate content is approximately 3 % by weight referred to the total casting resin mixture.

11. A casting resin mixture according to any one of claims 1 to 10, characterised by an additional content of peroxides, such as di-isopropyl peroxy dicarbonate or dicyclohexyl peroxy dicarbonate, and/or additions of up to 15 % by weight of methacrylic acid methyl ester and/or of up to 5 % by weight of methacrylic acid n-butyl ester, the quantities being referred to the total casting resin mixture.

12. A casting resin mixture according to claim 11, characterised by an addition of up to 10 % by weight of polymerization initiator, preferably dicyclohexyl peroxy dicarbonate, referred to the total casting resin mixture.

13. Use of the casting resin mixture according to any one of claims 1 to 12 for making rear view mirrors for motor-vehicles or the like by the casting process.

14. A method of making rear-view mirrors for motor-vehicles or the like by the casting process using the casting resin mixture according to any one of claims 1 to 12, characterised in that the casting resin polymer is introduced into a casting mould which is disposed with the mould cavity plane corresponding to the plane of the required mirror substantially vertical, the casting mould having an aperture at the top through which the said casting resin polymer is in contact, during the polymerization operation, with a casting resin mixture reservoir disposed above the casting mould.

**Revendications**

1. Mélange de résine à couler thermodurcissable pour la fabrication d'objets moulés en matière plastique à qualité de surface optique, caractérisé par un mélange de base de résine à couler et une adjonction de méthacrylate d'éthyltriglycol en tant que composant flexibilisant.

2. Mélange de résine à couler selon la revendication 1, caractérisé par le fait que le mélange de base est un mélange de résine à couler du type ester diallylique.

3. Mélange de résine à couler selon la revendication 1, caractérisé par le fait que le mélange de base est un mélange à base de carbonate de diallyldiglycol.

4. Mélange de résine à couler selon la revendication 1, caractérisé par le fait que le mélange de base est un mélange de résine à couler à base de polyester insaturé.

5. Mélange de résine à couler selon la revendication 1, caractérisé par le fait que le mélange de base est un mélange de résine époxydique.

6. Mélange de résine à couler selon la revendication 1, caractérisé par le fait que le mélange de base est un mélange de résine de silicone.

7. Mélange de résine à couler selon la revendication 1, caractérisé par le fait que le mélange de base est un mélange de résine de polyuréthanne.

8. Mélange de résine à couler selon la revendication 2, caractérisé par le fait que le mélange de base consiste en environ 25 % en poids de succinate de diallyle, environ 50 % en poids de glutarate de diallyle et environ 25 % en poids d'adipate de diallyle.

9. Mélange de résine à couler selon l'une des revendications 1 à 8, caractérisé par le fait que la proportion de méthacrylate d'éthyltriglycol par rapport au mélange de résine à couler total est de 2 à 5 % en poids.

10. Mélange de résine à couler selon la revendication 9, caractérisé par le fait que la proportion de méthacrylate d'éthyltriglycol par rapport au mélange de résine à couler total est d'environ 3 % en poids.

11. Mélange de résine à couler selon l'une des revendications 1 à 10, caractérisé par le fait qu'il contient, en outre, des peroxydes, tels que le peroxydicarbonate de diisopropyle ou le peroxydicarbonate de dicyclohexyle et/ou des adjonctions, en proportion allant jusqu'à 15 % en poids, de méthacrylate de méthyle et/ou jusqu'à 5 % en poids de méthacrylate de n-butyle par rapport au mélange de résine à couler total.

12. Mélange de résine à couler selon la revendication 11, caractérisé par le fait qu'il contient en outre, par rapport au mélange de résine à couler total, jusqu'à 10 % en poids d'un inducteur de polymérisation, de préférence du peroxydicarbonate de dicyclohexyle.

13. Utilisation du mélange de résine à couler selon l'une des revendications 1 à 12 pour la fabrication par la technique de coulée de rétroviseurs de véhicules ou objets analogues.

14. Procédé pour la fabrication de rétroviseurs de véhicules ou objets analogues par la technique de coulée avec utilisation du mélange de résine à couler selon l'une des revendications 1 à 12, caractérisé par le fait que l'on introduit le polymère de résine à couler dans un moule de coulée disposé en position essentiellement verticale avec le plan de la cavité de moule correspondant au plan du miroir à fabriquer, ce moule ayant à sa partie supérieure une ouverture et étant en liaison, par cette ouverture, au cours de l'opération de polymérisation, avec un réservoir du mélange de résine à couler disposé au-dessus du moule à couler.

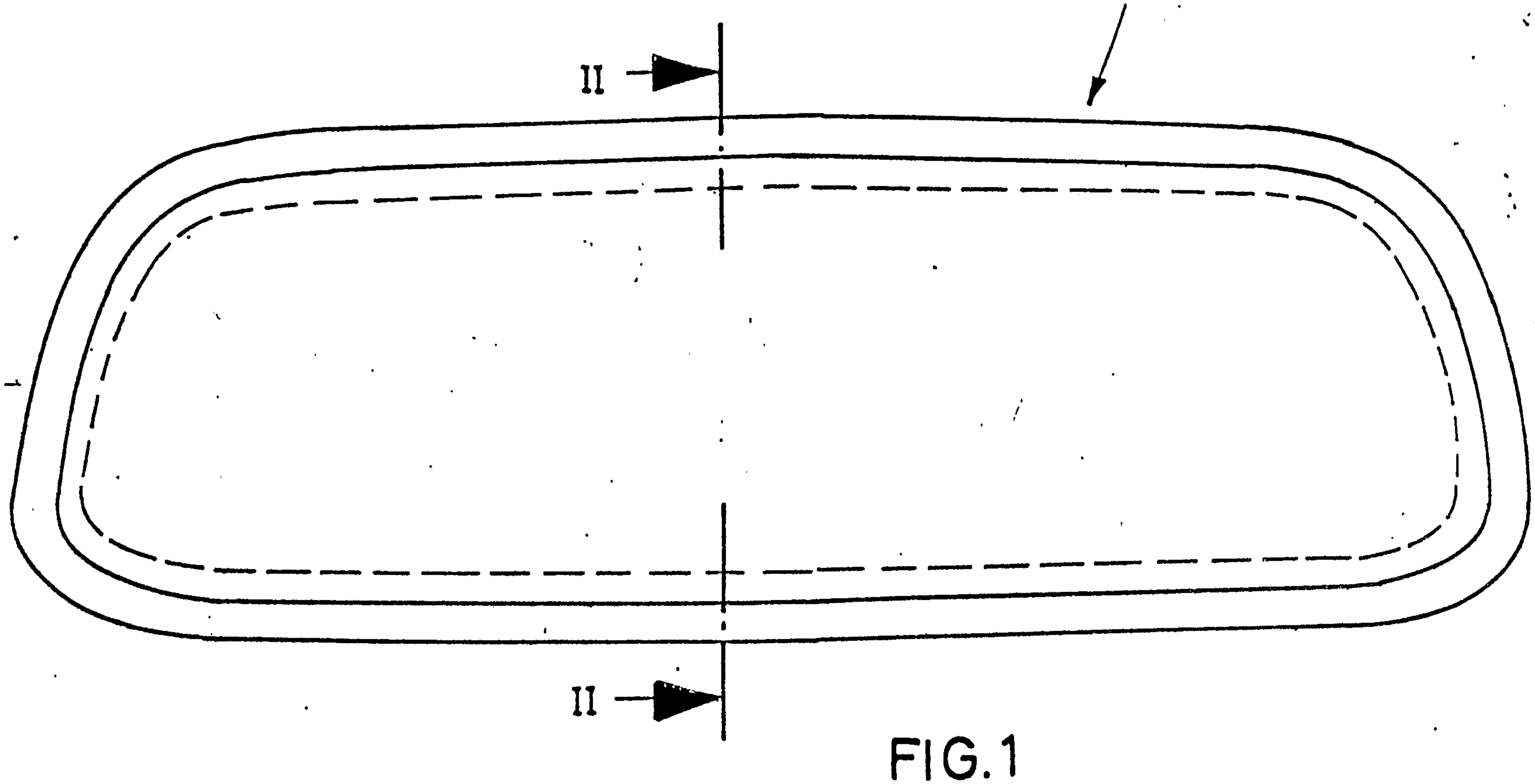


FIG.1

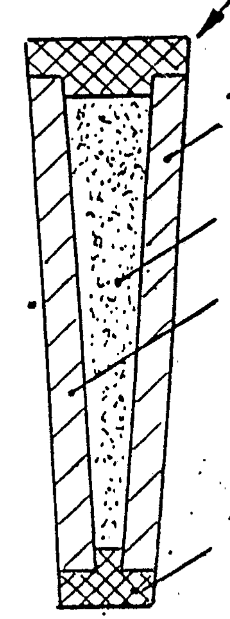


FIG.2

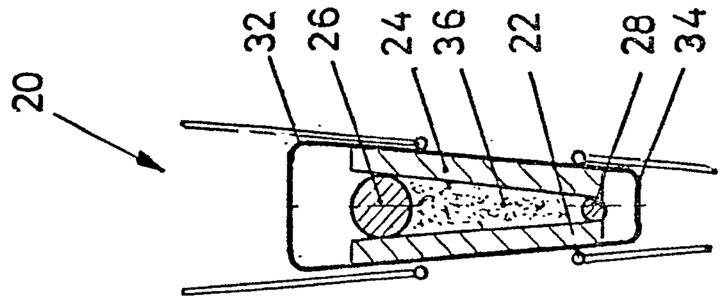


FIG.4

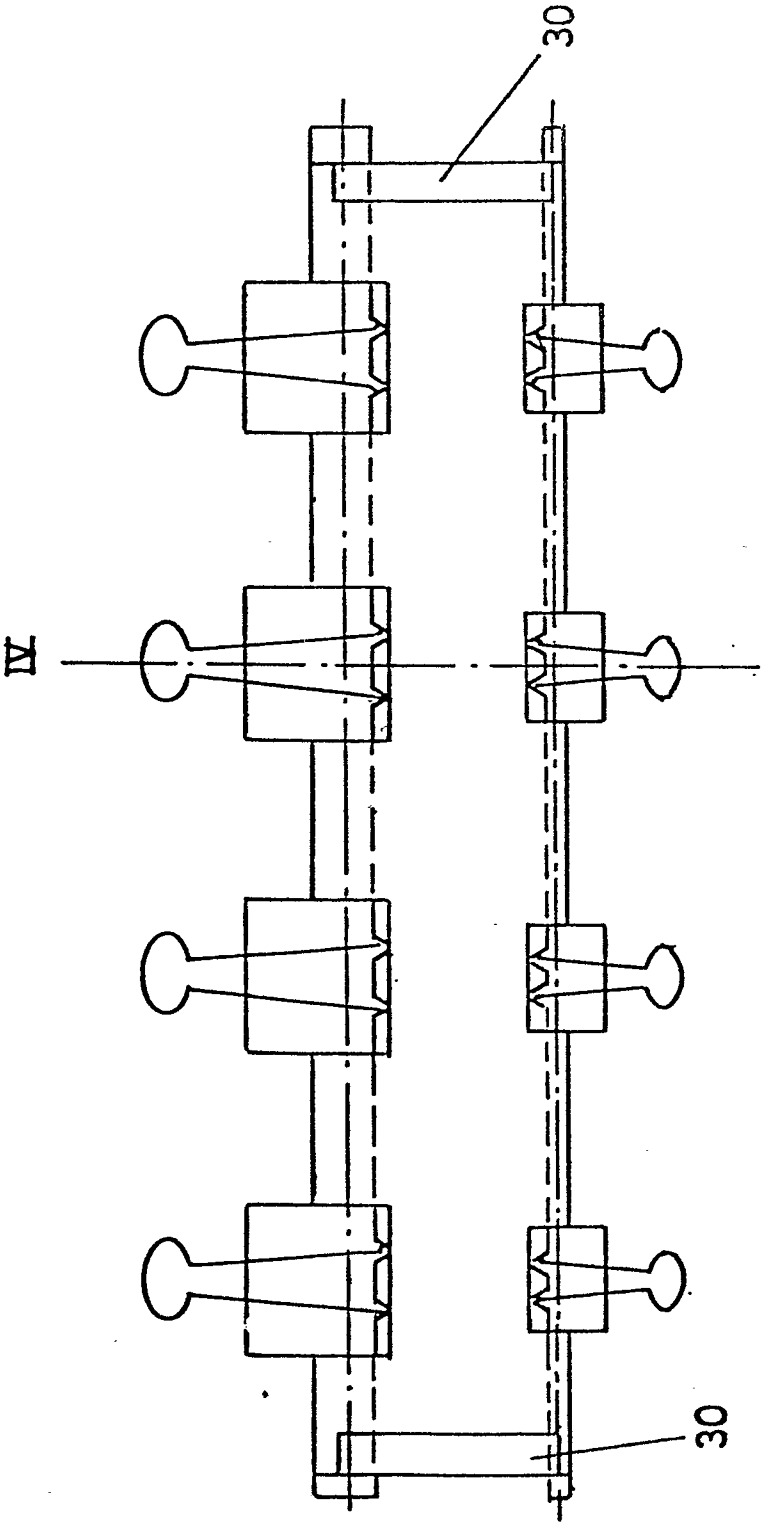


FIG.3